# EUROPEAN PATENT SPECIFICATION

(11) **EP 2 975 344 B1**
(45) Date of publication and mention of the grant of the patent: **06.10.2021**
(21) Application number: 14765282.0
(22) Date of filing: 11.03.2014
(51) Int. Cl.: F25D 23/00, F25D 11/00, F25D 27/00

(54) **REFRIGERATOR, CAMERA DEVICE, REFRIGERATOR DOOR POCKET, AND REFRIGERATOR HOLDER**
KÜHLSCHRANK, KAMERAVORRICHTUNG, KÜHLSCHRANKTÜRTASCHE UND KÜHLSCHRANKHALTER
RÉFRIGÉRATEUR, DISPOSITIF D'APPAREIL DE PRISE DE VUES, POCHE DE PORTE DE RÉFRIGÉRATEUR, ET SUPPORT DE RÉFRIGÉRATEUR

(30) Priority: 12.03.2013 JP 2013049073; 16.07.2013 JP 2013147562; 31.10.2013 JP 2013226970; 28.02.2014 JP 2014038459
(43) Date of publication of application: 20.01.2016
(73) Proprietor: Toshiba Lifestyle Products & Services Corporation, Kawasaki-shi, Kanagawa 210-0007 (JP)
(72) Inventor: SASAKI, Hironori, Tokyo 105-8001 (JP); FURUTA, Kazuhiro, Tokyo 105-8001 (JP); MARUTANI, Yuuki, Tokyo 105-8001 (JP); WATANABE, Kota, Tokyo 105-8001 (JP); IZAWA, Hirokazu, Tokyo 105-8001 (JP)
(74) Representative: Henkel & Partner mbB
(86) International application number: PCT/JP2014/056325
(87) International publication number: WO 2014/142118

(56) References cited:
- EP-A1- 1 662 218
- WO-A1-2012/091256
- JP-A- 2002 243 335
- JP-A- 2003 207 258
- JP-A- 2007 046 834
- JP-A- 2011 069 499
- JP-A- 2012 078 086
- JP-A- 2012 251 724

## Description

### TECHNICAL FIELD

Embodiments of the present invention relate to refrigerator.

### BACKGROUND

Systems configured to manage food by capturing images of food stored in a refrigerator have been proposed (See for example, patent document 1).

However, some users wish to check the status inside the refrigerator from remote locations such as outdoors with ease.

### PRIOR ART DOCUMENTS

### PATENT DOCUMENT

### Patent Document 1: JP 2012-226748 A

WO2012/091256 A1 discloses a refrigerator comprising an image capturing unit and a steam supply means. The steam is supplied in order to assist defrosting and in order to sterilize filters.

EP1662218 A1 describes a system for cooling cans and beverage bottles by spraying a liquid on the cans and bottles.

JP 2012 251724 A discloses a refrigerator with a plurality of cameras to capture images of the interior of the refrigerator.

### SUMMARY OF THE INVENTION

### PROBLEMS TO BE OVERCOME BY THE INVENTION

According to the present invention the above object is achieved by a refrigerator according to claim 1. The dependent claims are directed to different advantageous aspects of the invention.

### MEANS FOR OVERCOMMING THE PROBLEMS

A refrigerator according to claim 1 is provided.

### BRIEF DESCRIPTIONS OF THE DRAWINGS

FIG. 1 is a vertical cross-sectional view of a refrigerator according to the invention.
FIG. 2 illustrates the peripheral structures of a mist generator device and a humidifier device according to the invention.
FIG. 3 illustrates the structure of the mist generator device according to the invention.
FIG. 4 schematically illustrates an electrical configuration of a refrigerator and a camera device according to the invention.
FIG. 5 illustrates the timing in which a refrigerating chamber-side image capturing camera, a mist generator device, and a humidifier device according to a first embodiment of the invention are driven (Part 1).
FIG. 6 illustrates the timing in which a damper, a vegetable chamber-side image capturing camera, a mist generator device, and a humidifier device are driven differently than in the claimed invention.
FIG. 7 illustrates the timing in which a refrigerating chamber-side image capturing camera, a mist generator device, and a humidifier device according to a first embodiment of the invention are driven (Part 2).
FIG. 8 illustrates the timing in which the refrigerating chamber-side image capturing camera, a mist generator device, and a humidifier device according to a first embodiment of the invention are driven (Part 3).
FIG. 9 is a vertical cross-sectional view of a refrigerator of a second embodiment.
FIG. 10 is a vertical cross-sectional view of a refrigerator of a third embodiment.

### EMBODIMENTS OF THE INVENTION

A refrigerator will be described below.

### FIRST EMBODIMENT

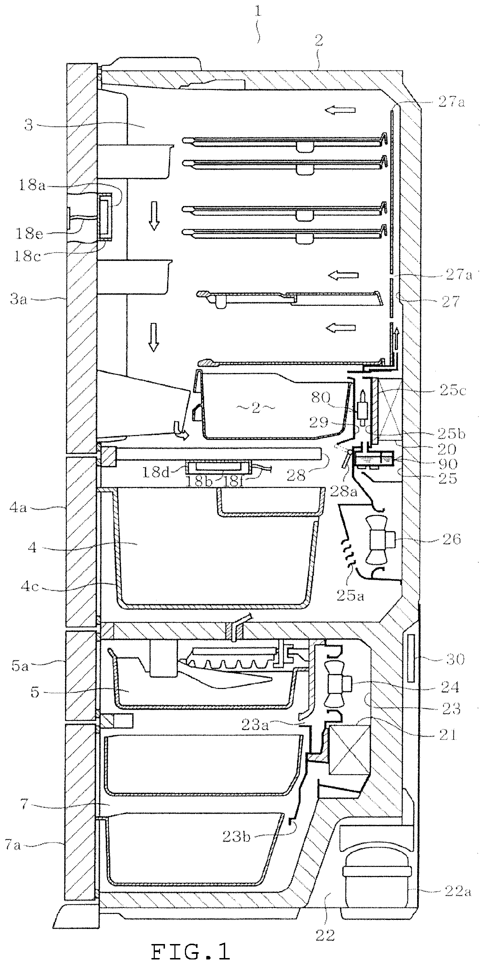

Next, a description will be given on a first embodiment with references FIGS. 1 to 8.

There has been a configuration of supplying mist into the refrigerator for providing moisture into the fridge interior. A refrigerator employing such configuration is provided with a mist generator configured to generate and supply mist. The mist generator generates mist by applying ultrasonic waves to stored water, discharges mist by electrostatic atomization. In a refrigerator provided with both an image capturing unit for capturing an image of the fridge interior and a mist generator, the image capturing unit may be inhibited from operating properly by failing to capture clear images by the mist fed from the mist generator or the high voltage, etc. produced at the mist generator.

It is thus, one object of the present invention to prevent the proper operation of the image capturing unit from being inhibited by the mist generator in a refrigerator provided with both the image capturing unit for capturing an image of the fridge interior and the mist generator.

Means for overcoming the problems will be described hereinafter. The refrigerator of the present invention is provided with an image capturing unit configured to capture an image of the fridge interior, a mist generator configured to spray mist, a spray port for feeding the mist sprayed by the mist generator into the fridge interior. The image capturing unit is provided in a location which does not confront the spray port.

In the present embodiment, the refrigerator 1 is provided with a refrigerating cooler 20 and a freezing cooler 21 as illustrated in FIG. 1. The refrigerating cooler 20 produces cool air for cooling the refrigeration chamber 3 and the vegetable chamber 4. The freezing cooler 21 produces cool air for cooling the ice maker chamber 5, an upper freezer chamber, and a lower freezer chamber 7 not illustrated. A machine chamber 22 is provided in the rear surface side of the bottom end portion of the refrigerator 1. The machine chamber 22 is provided with a compressor 22a, the main-control portion 30, etc. that serve as a refrigeration cycle.

The refrigerator 1 is provided with a freezing cooler chamber 23 and a freezer blower fan 24. The freezing cooler chamber 23 is provided behind the lower freezer chamber 7 located inside the refrigerator 1. The freezing cooler chamber 23 is provided with cool air outlets 23a and a return port 23b. The cool air outlets 23a are provided on the front surface of the freezing cooler chamber 23. The return port 23b is provided in the lower portion at the lower portion of freezer cooler chamber 23. The freezing cooler 21 and the freezing blower fan 24 are provided in the freezing cooler chamber 23. The freezing blower fan 24, configured to feed air, feeds cool air produced by the freezing cooler 21 into the ice maker chamber 5, the upper freezer chamber, and the lower freezer chamber 7 and circulates the cool air back into the freezing cooler chamber 23 from the cool air outlet 23a.

The refrigerator 1 is provided with a refrigerating cooler chamber 25 and a refrigerating blower fan 26. The refrigerating cooler chamber 25 is provided behind the refrigeration chamber 3 and the vegetable chamber 4. The refrigerating cooler chamber 25 is provided with a return port 25a. The return port 25a is provided at the lower front surface of the refrigerating cooler chamber 25. The refrigerating blower fan 26 is provided in the refrigerating cooler chamber 25.

The refrigerator 1 is provided with a cool-air feed duct 27. The cool air feed duct 27 extends upward from the upper portion of the refrigerating cooler chamber 25. The cool-air feed duct 27 is provided with multiple cool air feed ports 27a. The cool-air feed ports 27a are disposed ate the front portion of the cool-air feed duct 27 and are opened toward the refrigeration chamber 3. The front wall 25b of the refrigerating cooler chamber 25 projects forward relative to the cool-air feed duct 27. The refrigerating cooler chamber 25 is provided with a thermal insulation material 25c. The thermal insulation material 25 is provided on the backside of the front wall 25b. The refrigeration chamber 3 and the vegetable chamber 4 communicate through a connection port 28. The connection port 28 is provided in the rear side of the lower portion of refrigeration chamber 3.

The refrigerating blower fan 26, configured to feed air, feeds cool air produced by the refrigerating cooler 20 including into the refrigeration chamber 3 a special purpose chamber 12 from the cool-air feed portion 27a by way of the cool-air feed duct 27 as indicated by the white arrow of FIG. 1. The cool air is thereafter fed to the vegetable chamber 4 through the connection port 28 and sucked into the refrigerating cooler chamber 25 through the return port 25a. Thus, the cool air produced by the refrigerating cooler 20 is circulated through the refrigeration chamber 3 and vegetable chamber 4.

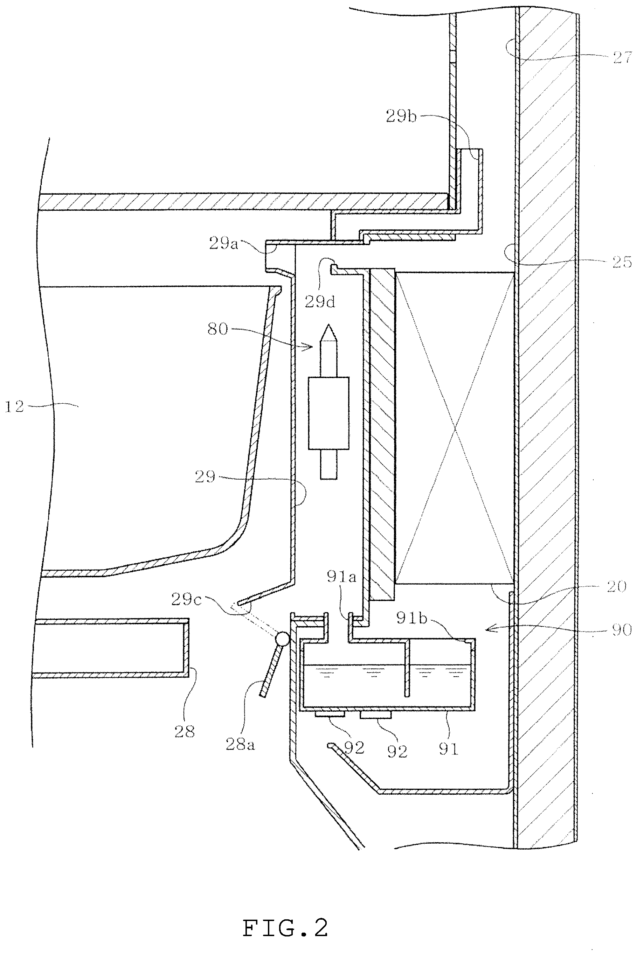

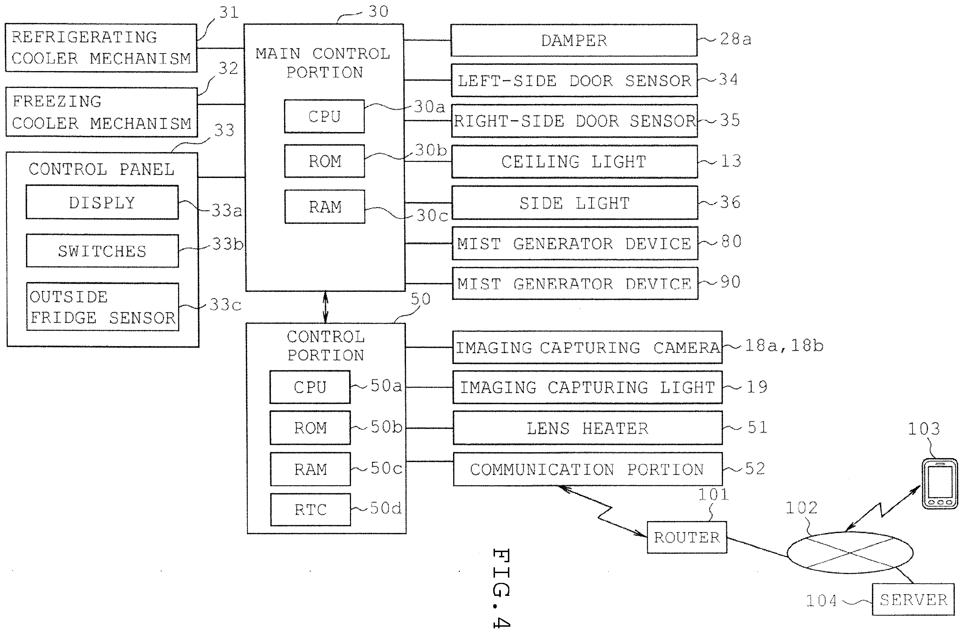

As illustrated in FIG. 2, the refrigerator 1 is provided with a mist generator 80 and a humidifier device 90. The mist generator device 80 and the humidifier device 90 serve as a mist generator for generating mist to be fed into the chambers of the refrigerator. The humidifier device 90 also serves as a water feeder for feeding water for generating mist to the mist generator device 80 (electrostatic atomizer). The mist generator device 80 and the humidifier device 90 are connected to the main-control portion 30 as illustrated in FIG. 4.

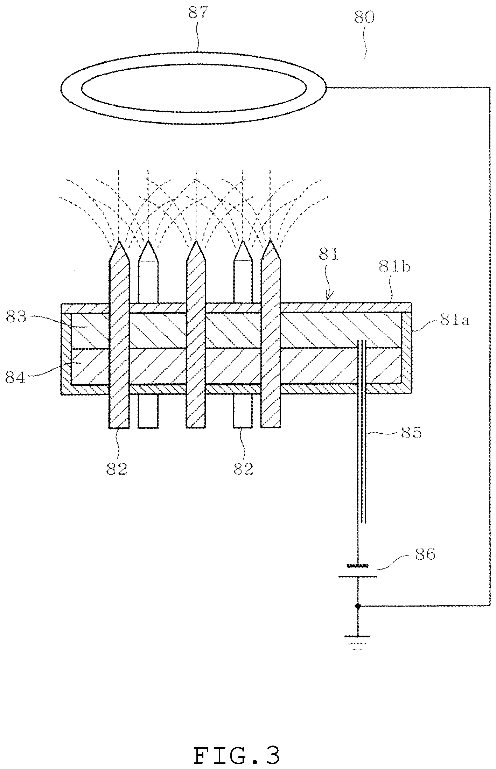

The mist generator device 80 is provided with a case 81, multiple discharge electrode members 82, a holding member 83, an electrically conductive member 84, an electrically conductive rod 85, a high-voltage power supply 86, and a counter electrode 87 as illustrated in FIG. 3. The case 81 is formed of an electrically insulative resin material for example and is configured by a body 81 a and a lid 81b. The case 81a is bottomed and thus, shaped like a box. The lid 81b covers the opening of the body 81a.

The discharge electrode member 82 is formed of a porous material exhibiting moisture absorbing and moisture retaining properties and is formed like a pin having sharp pointed tip. In this example, the tip of the discharge electrode formed of a monolithic member serves as a mist discharging portion. The portion of discharge electrode member 82 excluding the tip portion serves as a water feed portion. That is, the discharge electrode member 82 is wholly made of the same material. The mist discharging portion in the tip side of the discharge electrode member 82 and the water feed portion in the base end side of the discharge electrode are formed monolithically without any seams. The tip portion of the discharge electrode member 82, that is, the mist discharge portion is exposed to the exterior of the case 81. The base-end portion discharge electrode member 82, that is, the end portion of the water feed portion located in the opposite side of the mist discharge portion is exposed to the exterior of the case 81. The porous material forming the discharge electrode member 82 may be made of a felt material, etc. such as polyester fiber.

The discharge electrode member 82 is formed of a porous material having moisture absorbing and moisture retaining properties being impregnated with a material exhibiting spontaneous moisture absorbing properties that absorbs moisture from air. As a result, the discharge electrode material 82 exerts spontaneous moisture absorbing properties of spontaneously absorbing moisture in the air when the temperature of the ambient becomes equal to or greater than a predetermined value. Examples of materials having such spontaneous water absorbing properties may be deliquescent materials that spontaneously absorb moisture in the air without supply of energy from the outside and dissolving into the absorbed moisture. In the present embodiment, the discharge electrode material 82 is impregnated with poly potassium phosphate being a macromolecular phosphate serving as one example of such deliquescent materials. As a result, the discharge electrode member 82 as a whole including the mist discharge portion and the water feed portion exhibits spontaneous moisture absorbing properties that absorbs moisture from the air.

The discharge electrode member 82 being impregnated with poly potassium phosphate as the deliquescent material starts to absorb moisture from the surrounding air when the temperature of the ambient reaches 5 degrees Celsius and humidity exceeds 40% for example. It is possible to stably sustain moisture absorption of the discharge electrode member 82 by maintaining the humidity of the ambient to 40 to 50%. It is possible to control the conditions in which moisture absorption begins in the discharge electrode member 82 through adjustment of temperature and humidity of the surrounding ambient depending upon the properties of the materials used in impregnating the discharge electrode material 82 and also stabilize moisture absorbing action of the discharge electrode member 82.

The holding member 83 is provided inside the case 81. The holding portion 83 is formed of an insulating material. Examples of insulating materials forming the holding member 83 include resin materials such as a polypropylene. The electrically conductive member 84 is provided inside the case 81. The electrically conductive material 84 contains electrically conductive materials such as carbon. The discharge electrode member 82 extends through the holding member 83 and the electrically conductive member 84 and is secured by the holding member 83 and the electrically conductive member 84.

The electrically conductive rod 85 is inserted into the electrically conductive material 84 from the exterior of the case 81. The base end portion of the electrically conductive rod 85 is connected to the negative pole of the high-voltage power supply 86 of a power supply circuit. Thus, a negative high voltage from the high voltage power supply 86 is applied to the discharge electrode member 82 through the electrically conductive rod 85 and the electrically conductive material 84 to negatively charge the discharge electrode member 82.

The counter electrode 87 is disposed outside the case 81 so as to confront the tip portion of the discharge electrode member 84, that is, the mist discharge portion. The counter electrode 87 is connected to the positive pole of the high voltage power supply 86. The counter electrode 87 being circularly annular in this example is made of an electrically conductive material such as metal. The shape of the counter electrode 87 may be elliptically annular or polygonally annular for example instead of the circularly annular shape. The counter electrode 87 need not be annular but may be shaped like a plate or a sphere.

The discharge electrode member 82 of the mist generator device 80 spontaneously absorbs moisture in the air without requiring external supply of energy. The moisture absorbed by the discharge electrode member 82 thereafter permeates into the discharge electrode member 82 and is supplied to the mist discharge portion located at the tip portion thereof. High voltage is applied to the discharge electrode member 82 from the high voltage power supply 66 by way of the electrically conductive rod 85 and the electrically conductive member 84. As a result, charge concentrates at the tip portion of the discharge electrode member 82, that is, at the mist discharge portion and is given energy surpassing the surface tension of water contained in the mist discharge portion. As a result, water contained in the mist discharge portion of the discharge electrode member 82 is discharged as mist through Rayleigh breakup, in other words, electrostatically atomized.

The water particles discharged as mist from the tip portion of the discharge electrode member 82 is negatively charged. The high voltage power supply 86 serves as a high voltage generator unit configured to generate high voltage for charging mist.

As illustrated in FIG. 2, the refrigerator 1 is provided with humidifying duct 29. The humidifying duct 29 is provided in the special purpose chamber 12 which belongs in a different compartment from the refrigeration chamber 3 and the vegetable chamber 4. That is, the humidifying duct 29 is provided behind the special purpose chamber 12 and in front of the refrigerating cooler chamber 25. The mist generator device 80 is provided in the humidifying duct 29. The ultrasonic humidifier device 90 is provided below the humidifying duct 29. The ultrasonic humidifier device 90 is provided with a water reservoir 91 and an ultrasonic oscillator 92. The water reservoir 91 is shaped like a rectangular container.

The water reservoir 91 is provided with a humidifying port 91a and an opening 91b. The humidifier port 91a is provided on the upper surface of the water reservoir 91 and communicates the interior of the water reservoir 91 with the humidifying duct 29. The opening 91b is located below the refrigerating cooler 20. The defrost water produced as the result of defrosting of the refrigerating cooler 20 drips from the refrigerating cooler 20 and is stored in the water reservoir 91 through the opening 91b.

The ultrasonic oscillator 92 is disposed on the undersurface of the water reservoir 91 so as to be located below the humidifying port 91a. When the ultrasonic oscillator 92 is oscillated, the water inside the water reservoir 91 is atomized and discharged as mist into the humidifying duct 29 from the humidifying port 91a. When the ultrasonic humidifier device 90 is provided with multiple ultrasonic oscillators 92, the oscillation frequencies of the ultrasonic oscillators 92 may be specified to different values. For example, the oscillation frequency of one of the ultrasonic oscillators 92 may be specified to a frequency being suitable for producing hydrogen peroxide water from water, whereas the oscillation frequency of the other of the ultrasonic oscillators 92 may be specified to a frequency being suitable for atomizing water. Ultrasonic oscillation occurring at a predetermined frequency causes cavitation in water and charges the mist. The voltage applied to the ultrasonic generator element serves as a high voltage generator.

The humidifying duct 29 is provided with a first spray port 29a, a second spray port 29b, and a third spray port 29c. The first spray port 29a, the second spray port 29b, and the third spray port 29c are spray ports for feeding the mist generated by the mist generator device 80 and the ultrasonic humidifier device 90 into the chamber interior. The first spray port 29a, the second spray port 29b, and the third spray port 29c are each opened toward compartments different from the refrigeration chamber 3 and the vegetable chamber 4.

For example, the first spray port 29a is provided in the upper front side of the humidifying duct 29 and communicates with the special purpose chamber 12 which belongs to a different compartment from the refrigeration chamber 3 and the vegetable chamber 4. The second spray port 29b is provided so as to extend rearward from the upper portion of the humidifying duct 29 and communicates with the cool-air feed duct 27 which belongs to a different compartment from the refrigeration chamber 3 and the vegetable chamber 4. The third spray port 29c is provided on a lower front surface of the humidifying duct 29 and communicates with the special purpose chamber 12 belonging to a different compartment from the refrigeration chamber 3 and the vegetable chamber 4. The refrigerator 1 is further provided with a damper 28a. The damper 28a is connected to the main-control portion 30 as illustrated in FIG. 4. The damper 28a is configured to open and close the third spray port 29c by being controlled by the main-control portion 30.

The humidifying duct 29 is provided with a communication opening 29d. The communication opening 29d is provided in the upper rear side of the cool-air feed duct 27 and communicates the portion of the cool-air feed duct 27 located immediately above the refrigerating cooler 20 with the humidifying duct 29. Some of the mist generated by the mist generator device 80 or the ultrasonic humidifier device 90 is fed into the special purpose chamber 12 along with the cool air produced by the refrigerating cooler 20 through the first spray port 29a. Some of the mist generated by the mist generator device 80 or the ultrasonic humidifier device 90 is fed to the cool-air feed duct 27 through the second spray port 29b and thereafter fed into the refrigeration chamber 3 along with the cool air produced by the refrigerating cooler 20 through the cool-air outlet 23a. Some of the mist generated by the mist generator device 80 or the ultrasonic humidifier device 90 is fed into the vegetable chamber 4 from the third spray port 29c through the connection port 28.

As illustrated in FIG. 1, the refrigerator 1 is provided with multiple image capturing cameras for example serving as an image capturing unit for capturing an image of the fridge interior. In this example, an image capturing camera 18a of the refrigeration chamber side and an image capturing camera 18b in the vegetable chamber side are provided. The image capturing camera 18a in the refrigeration chamber side is provided for example at the right-side door 3b of the refrigeration chamber 3 and captures an image inside the refrigeration chamber 3. The image capturing camera 18b in the vegetable chamber side is provided on the surface of the ceiling of the vegetable chamber 4 and captures an image inside the vegetable chamber 4.

Both the image capturing camera 18a of the refrigeration chamber side and the image capturing camera 18b of the vegetable chamber side are provided at locations that do not confront either of the first spray port 29a, the second spray port 29b, and the third spray port 29c. Each of the image capturing cameras 18a and 18b and the spray ports 29a, 29b, and 29c are provided in different compartments. For example, the image capturing camera 18a is disposed airflow upstream of the spray port 29a being configured to feed the mist into the special purpose chamber 12.

The mist being discharged from a location that does not confront the image capturing camera 18a is circulated so as to moisturize the chamber interior without being sprayed directly onto the camera surface.

The image capturing camera 18 may be mounted on the receiving portion configured to allow the mounting of the image capturing camera 18 or on the storing portion of the cavity 600 which is one example of a recess provided on the wall of the door. The camera may be stored entirely within the recess 600, in which case, a coating cover may be provided over the recess 600. The cover may be fully transparent, or may have a hole provided on a portion facing the lens, or only the portion facing the lens may be transparent. A transparent protection cover covering the lens may be provided in front of the lens of the camera device. When using the camera device, a transparent film may be provided forward relative to the lens to serve as the protection cover. The coating cover as well as the protection cover are hereinafter referred to as a cover, etc. (cover unit). Further, the lens and the cover, etc. taken together may be referred to as lens, etc.

Some portions of the lens, the coating cover, and the protection cover (lens, etc.) are exposed to the environment of the interior of the storage chambers.

The image capturing camera is disposed in a special environment inside the storage chambers of the refrigerator which requires supply of moisture for preserving the freshness of vegetables, etc. When images of such environment are captured using the image capturing camera in which the lens and the cover, etc. are exposed to such environment, it was not possible to capture clear images and thus, not possible for the image capturing camera to operate properly depending upon the state of the lens and the cover or depending upon the environment of the interior of the storage chambers.

Examples of the specific problems encountered include the surfaces of the lens and the cover, etc. being susceptible to develop dew condensate by the supplied mist in which case the lens and the cover, etc. become fogged to prevent capturing of clear images. Further, generation of mist causes the interior of the storage chamber to be filled with the mist and thereby fogged to prevent capturing of clear images with the camera.

Further, when the mist is discharged by applying high voltages, the mist may become charged and produce noise when the charged mist contacts the camera in which case it may not be possible to capture good images.

Thus, attempts are made to overcome such specific problems originating from the provision of the camera to the refrigerator which include adjustment in the location of the mist generator unit and the environment of capturing images of the storage chamber interior so that mist does not contact the camera as much as possible and enabling good image capturing even when the mist does contact the camera.

Direct contact between the mist and the camera is avoided by placing the camera at a location that does not confront the outlet of the mist.

Exterior cases 18c and 18d that serve as the outer shells of the cameras 18a and 18b are formed of an electrically conductive material such as electrically conductive resin or metal material. That is, the image capturing cameras 18a and 18b are installed in the exterior cases 18c and 18d serving as storage containers made of an electrically conductive material. The exterior case 18c of the image capturing camera 18a is grounded to an exterior plate of the right-side door 3b through an earth line 18e, whereas the exterior case 18d of the image capturing camera 18b is grounded to the outer plate of the right-side door 3b and the exterior housing of the refrigerator 1. The outer plate of the right-side door 3b and the exterior housing of the refrigerator 1 are formed of an electrically conductive metal. Thus, it is possible to prevent image capturing cameras 18a and 18b from being charged by the charged mist sprayed from the mist generator device 80.

The main-control portion 30 is configured to drive the mist generator device 80 as well as the humidifier device 90 intermittently and is further configured to drive the image capturing cameras 18a and 18b intermittently to capture images of the fridge interior. The main-control portion 30 controls the drive of the mist generator device 80 and the humidifier device 90 in synchronism with the image capturing performed by the image capturing cameras 18a and 18b. Synchronizing the drive of the mist generator device 80 and the humidifier device 90 with the image capturing performed by the image capturing cameras 18a and 18b denotes that an adjustment is made in the timing in which the mist generator device 80 and the humidifier device 90 are driven and the timing in which the images are captured by the image capturing cameras 18a and 18b by the main-control portion. In this example, the main-control portion 30 makes an adjustment so that the driving of the mist generator device 80 and the humidifier device 90 and the image capturing by the image capturing cameras 18a and 18b are not performed at the same time.

The interval of image capturing by the image capturing cameras 18a and 18b is relatively long. For example, the main-control portion 30 drives the image capturing cameras 18a and 18b several times a day to capture images of the fridge interior. On the other hand, the interval of mist feeding by the mist generator device 80 and the humidifier device 90 is relatively short. For example, mist is fed to the chamber interior by driving the mist generator device 80 and the humidifier device 90 several times an hour.

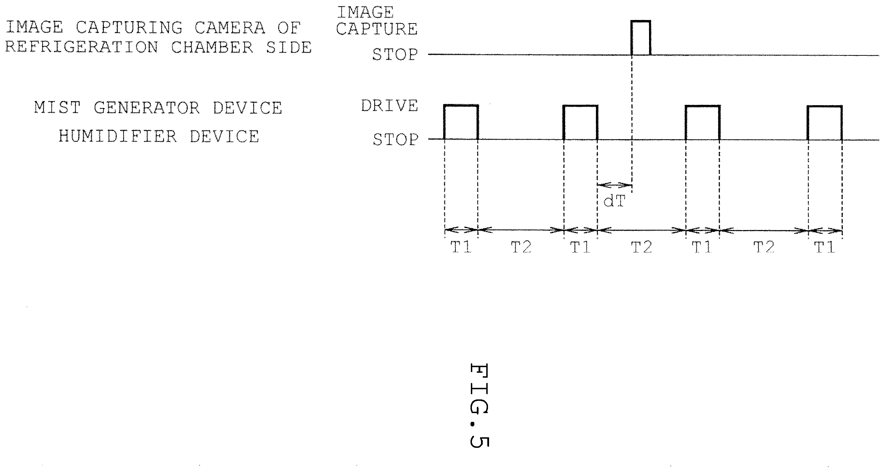

More specifically, the main-control portion 30 generates mist intermittently from the mist generator device 80. That is, the main-control portion 30 drives the mist generator device 80 and the humidifier device 90 during period T1 as illustrated in FIG. 5 to feed mist into the chamber interior. Then, feeding of mist is stopped during period T2 to standby whereafter the mist generator device 80 and the humidifier device 90 are driven again during period T1 to feed mist into the chamber interior. That is, the main-control portion 30 is basically configured to repeat period T1 in which the mist generator device 80 and the humidifier device 90 are driven and period T2 in which the mist generator device 80 and the humidifier device 90 are stopped.

The main-control portion 30 is configured to capture an image of the interior of the refrigeration chamber 3 by the image capturing camera 18a of the refrigeration chamber side during period T2 when the mist generator device 80 and the humidifier device 90 are stopped. That is, the main-control portion 30 is configured to capture an image of the interior of the refrigeration chamber 3 by the image capturing camera 18a of the refrigeration chamber side during a period which does not overlap with the period in which the mist generator device 80 and the humidifier device 90 are driven. The main-control portion 30 captures an image of the interior of the refrigeration chamber 3 by the image capturing camera 18a of the refrigeration chamber side during period T2 in which the mist generator device 80 and the humidifier device 90 are stopped after a predetermined period dT has elapsed after the mist generator device 80 and the humidifier device 90 have been stopped.

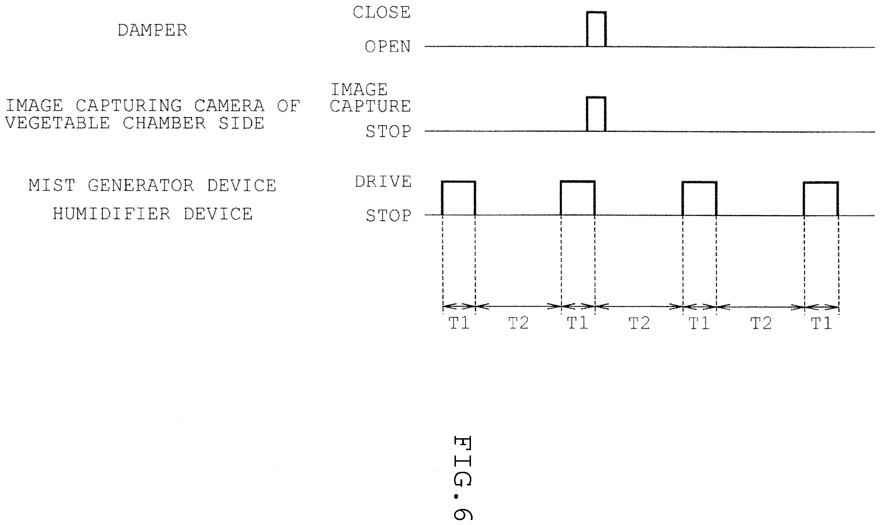

FIGS. 2 and 6 illustrate a non-claimed example, wherein the main-control portion 30 is further configured to close the third spray port 29c by driving damper 28a when performing image capturing using the image capturing camera 18b of the vegetable chamber side. Thus, mist is prevented from being fed into the vegetable chamber 4 side from the third spray port 29c while an image of the vegetable chamber 4 is being captured by the image capturing camera 18b of the vegetable chamber side. The main-control portion 30 opens the third spray port 29c by driving the damper 28a again when completing the image capturing by the image capturing camera 18b of the vegetable chamber side. Feeding of mist into the vegetable chamber 4 through third spray port 29c is thus, enabled.

In the present embodiment, the image capturing camera 18a of the refrigeration chamber 3 and the image capturing camera 18b of the vegetable chamber 4 are provided at locations that do not confront either of the first spray port 29a, the second spray port 29b, and the third spray port 29c. It is thus, possible to reduce the possibility of attachment of mist to the image capturing cameras 18a and 18b since the mist sprayed from the spray ports 29a, 29b, and 29c are not sprayed directly toward the cameras. It is thus, possible to suppress development of dew condensate on the lenses of the cameras and on the covers, etc to allow capturing of clear images. Is further possible to eliminate instances where clear images of the chamber interior cannot be captured by the presence of a fog in front of the camera developed by the mist of fine water particles sprayed from the feed outlets.

Further, the coating cover, etc. described above is sometimes also used as a cover for the in-fridge lighting. Thus, projection and retractions are often formed on the lighting cover in order to diffuse light. Water accumulates on the projections and retractions when placed in direct contact with the mist. This causes water to accumulate on the portions confronting the cameras to possibly prevent capturing of clear images. Such risks can be eliminated by not allowing the feed outlets to confront the cameras.

It is further possible to resolve the problems originating from dew condensate and thick fog by circulating the mist through the cool air duct since the concentration of the mist can be reduced.

It further possible to reduce the possibility of charged mist produced by the high voltage generator from being attached to the image capturing cameras 18a and 18b. As a result, proper operation of the image capturing cameras 18a and 18b are not easily inhibited by the mist generator device 80.

The image capturing cameras 18a and 18b and the spray ports 29a, 29b, and 29c are provided in different compartments. This also resolves the problem of clear image capturing being inhibited by dew condensate and foggy haze and reduces the possibility of the mist sprayed from the spray ports 29a, 29b, and 29c from being attached to the image capturing cameras 18a and 18b becoming charged. It is thus, possible to reduce the influence of the charged mist attached to the image capturing cameras 18a and 18b. As a result, it is possible to suppress malfunctioning of the image capturing cameras 18a and 18b by the mist generator device 80.

The main-control portion 30 is configured to drive the mist generator device 80 as well as the humidifier device 90 intermittently and is further configured to drive the image capturing cameras 18a and 18b intermittently in capturing images of the fridge interior. By controlling the amount of mist in order to prepare a suitable environment for image capturing, it is possible to make adjustments in the amount of dew condensate and fog and consequently reduce their influence on the quality of image capturing while also allowing the negative impact on the image capturing cameras 18a and 18b caused by consecutive generation of high voltage by the mist generator device 80 to be reduced.

The main-control portion 30 executes a control to synchronize the drive of the mist generator device 80 and the humidifier device 90 with the image capturing performed by the image capturing cameras 18a and 18b. That is, the main-control portion 30 synchronizes the timing in which the mist generator device 80 and the humidifier device 90 are driven with the timing in which image capturing is performed by the image capturing cameras 18a and 18b so that they do not occur at the same time. For example, the main-control portion 30 stops the mist generator device 80 and the humidifier device 90 while image capturing by the image capturing cameras 18a and 18b is ongoing so that mist is not fed from the spray ports 29a, 29b, and 29c. Since images are not captured especially at the moment when a foggy mist is generated, it is possible to prepare a suitable environment for capturing an image of the interior of the storage chamber and facilitate image capturing. Thus, mist generated by the mist generator device 80 and the humidifier device 90 is prevented from being attached to the image capturing cameras 18a and 18b while image capturing by the image capturing cameras 18a and 18b are ongoing. As result, it is possible to prevent development of dew condensate and water droplets covering the camera lens and the covers, etc. by increased moisture while image capturing is ongoing. It is further possible to reduce the influence of noise caused by attachment of mist charged to high voltages on the image capturing cameras 18a and 18b while image capturing by the image capturing cameras 18a and 18b is ongoing.

The main-control portion 30 closes the third spray port 29c by driving the damper 28a while image capturing by the image capturing camera 18b in the vegetable chamber side is ongoing so that mist is not fed into the vegetable chamber 4 from the third spray port 29c. Similar effect can be achieved by this arrangement as well.

The image capturing cameras 18a and 18b installed in the exterior cases 18c and 18d formed of an electrically conductive material. The exterior cases 18c and 18d are further grounded to the exterior housing, etc. of the body 2 by earth lines 18e and 18f. As a result, it is possible to neutralize the charged mist even when the mist charged to high voltages is attached to the image capturing cameras 18a and 18b. It is thus, possible to reduce the influence of charged mist.

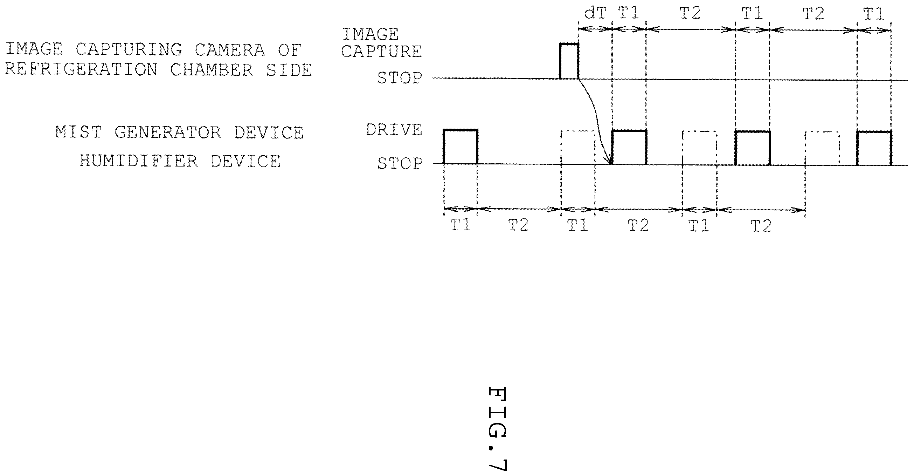

The following controls may be executed when the main-control portion 30 is configured to drive the image capturing camera 18a in the refrigeration chamber side based on signals provided from external components. For example, when receiving a signal triggering the execution of image capturing by the image capturing camera 18a of the refrigeration chamber side from an external component at a timing overlapping with the timing in which the mist generator device 80 and the humidifier device 90 are to be driven as illustrated in FIG. 7, the main-control portion 30 is configured to prioritize the execution of image capturing by the image capturing camera 18a of the refrigeration chamber side and delays the driving of the mist generator device 80 and the humidifier device 90. In such case, the main-control portion 30 drives the mist generator device 80 and the humidifier device 90 after a predetermined time dT has elapsed after image capturing has been executed by the image capturing camera 18a of the refrigeration chamber side. The above described arrangement also achieves the operation and effect similar to those of the third embodiment described above.

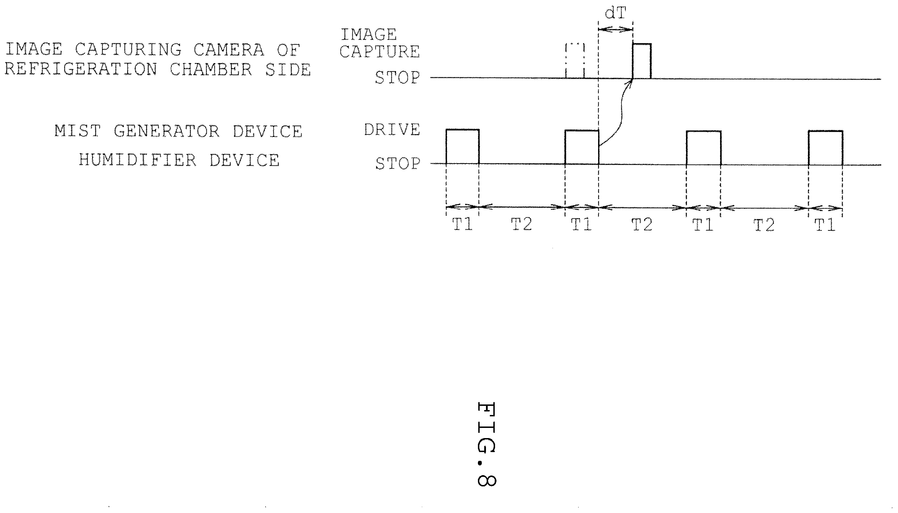

The following controls may be executed when the main-control portion 30 is configured to drive the image capturing camera 18a in the refrigeration chamber side based on signals provided from external components. For example, when receiving a signal triggering the execution of image capturing by the image capturing camera 18a of the refrigeration chamber side from an external component at a timing overlapping with the timing in which the mist generator device 80 and the humidifier device 90 are to be driven as illustrated in FIG. 8, the main-control portion 30 is configured to prioritize the driving of the mist generator device 80 and the humidifier device 90 and delays the execution of image capturing by the image capturing camera 18a of the refrigeration chamber side. In such case, the main-control portion 30 executes image capturing by the image capturing camera 18a of the refrigeration chamber side after a predetermined time dT has elapsed after driving the mist generator device 80 and the humidifier device 90.

Mist is not discharged directly into the storage chambers since the mist generator unit is provided in the duct 29. It is thus, possible to reduce the concentration of the mist inside the storage chamber and prepare an environment that facilitates execution of image capturing. Further, multiple outlets are provided at the duct 29. It is thus, possible to reduce the concentration of the mist by discharging the mist through different outlets. A cover providing a cover over the mist generator unit will suffice as the duct 29.

The outlets are disposed so as not to be located in front of the camera. The outlets may be disposed so as to be displaced in the left and right direction or the up and down direction with respect to a forward projection of the camera projected on the wall located in the front side of the camera. The outlet is preferably not disposed on the wall on which the camera is installed and not on the wall located in front of the camera, but on the wall located adjacent to the wall on which the camera is installed. In this example, the camera is installed on the wall of the door. Thus, the outlet of the mist generator device is preferably not provided on the rear wall located in the front side of the camera but on the left and right sidewalls or the up and down sidewalls located adjacent to the door. As a result, it is difficult for the mist sprayed from the outlet to contact the camera.

Even when the outlet is disposed on the wall located adjacent to the door, it is further preferable to dispose the outlet at a location in which the mist does not travel across the line of extension of the direction in which the camera is oriented. For example, when the mist exists in the direction of image capturing by the camera, the camera will be able to capture an image of a location in front of the mist but not of a location behind the mist.

It is thus, preferable to dispose the outlet so that the region located on the line of extension of the direction in which the camera is oriented does not cross over or overlap with the region located on the line of extension of the direction in which the outlet is oriented so as to be disposed in the left and right or the up and down direction even when the outlet of the mist is disposed on the wall that is different from the wall on which the camera is disposed. As a result, it is possible to reduce the possibility of the image captured by the camera to be poor in visibility by the mist being captured into the image and allow capturing of an image which is clearly visible to the far side of the chamber interior.

The line of extension of the center of the camera lens or the orientation of the CMOS sensor preferably does not overlap with the region located on the extension of the direction in which the outlet of the mist is oriented.

It is further preferable for the region of the opening of the mist outlet projected in the up and down direction to not overlap with the region existing on the line of extension of the direction in which the camera is oriented. In FIGS. 1 and 2 for example, mist is discharged from the opening of the mist outlet 29a. The mist is prone to spread in the upward direction because of its light weight or in the downward direction by gravity. For example, when the mist rises upward and the uprising mist overlaps with the projected surface of the image capturing camera 18a as viewed from the front side of the door, the location behind the upward and downward projection of the opening will not be visible by the mist. Thus, the mist outlet 29a is preferably disposed so that the region obtained by projecting the opening of the mist outlet 29a, taken along the lateral lengthwise direction, in the up and down direction does not overlap with, and therefore avoids, the range of projected surface of the image capturing camera 18a as viewed from the front side of the door. It thus, possible to capture clear images.

It is further preferable for the feed port 27a of the duct 27 for circulating cool air to be disposed in a location which does not confront the camera. It is thus, possible to reduce possibility of even a small amount of mist from contacting the camera.

The mist generator unit may be an ion generator device configured to generate charged mist of H+ (H20) m being a positive ion and O2-(H2O)n being a negative ion (m, n are positive integers) for example.

Further, when the door is closed after once being opened, dew condensate may develop on the camera lens and the cover, etc. Thus, a means for drying the lens, etc. may be provided in which dew condensate is blown away by turning ON the fan 26 serving as a dew condensate removing unit when closing of the door has been detected. In such case, another fan in addition to the blower fan 26 may be provided in the duct 27. The two fans may be driven at the same time and execute a control to increase the amount of airflow or increase the total count of rotations of the two fans and thereby allow dew condensate to be removed more effectively as compared to a configuration in which only a single fan is provided.

The fan 26, etc. may be driven in rotation while image capturing is ongoing. As a result, a foggy mist blocking the view of the image capturing unit can be blown away to provide a clean view and thereby enabling capturing of clear images. Two fans may be driven at the same time in such case as well.

The fan provided at the duct 27 will work more effectively when provided near the ceiling located above the duct 27. When the camera is mounted on the door for example, the cool air discharged from the upper portion of the duct 27 will be urged forward by the fan to hit the upper portion of the door. Because the cool air hitting off the upper portion of the door flows downward, it is possible to create an airflow capable of blowing off the dew condensate developed on the camera. As a result, it is possible to resolve the fogging of the lens and cover, etc. to allow capturing of clear images.

By operating the mist generator unit intermittently and rotating the fan while the mist generator unit is turned OFF, a cool dry air is generated through the evaporator of the cooler. It is possible to clear the fog on the lens by impinging the dry air on the lens.

It is preferable to provide a door opening detector unit and turn OFF the mist generator unit while the door is opened. When the door is opened, warm humid air is introduced into the storage chamber and increases the humidity of the storage chamber interior when combined with the humidity attributable to the mist and may lead to development of dew condensate. It is thus, possible to prevent image capturing from being inhibited by dew condensate covering the lens, etc. of the camera by turning OFF the mist generator unit when the door is opened.

When moisturous storage items such as vegetables are stored, the mist may provide excessive moisture. Thus, the following control may be executed when employing a configuration in which image capturing is performed when a change in the storage amount has been detected by a storage amount detection unit such as a weight sensor provided on a shelf or a storage container for placing food for example. That is, the performance of the mist generator unit may be reduced or stopped when it has been detected that the storage amount has been increased. It is thus, possible to reduce the amount of mist being discharged from the mist discharging unit while maintaining moisture of the fridge interior. As a result, it is possible to prevent development of dew condensate on the lens, etc. of the camera.

### SECOND EMBODIMENT

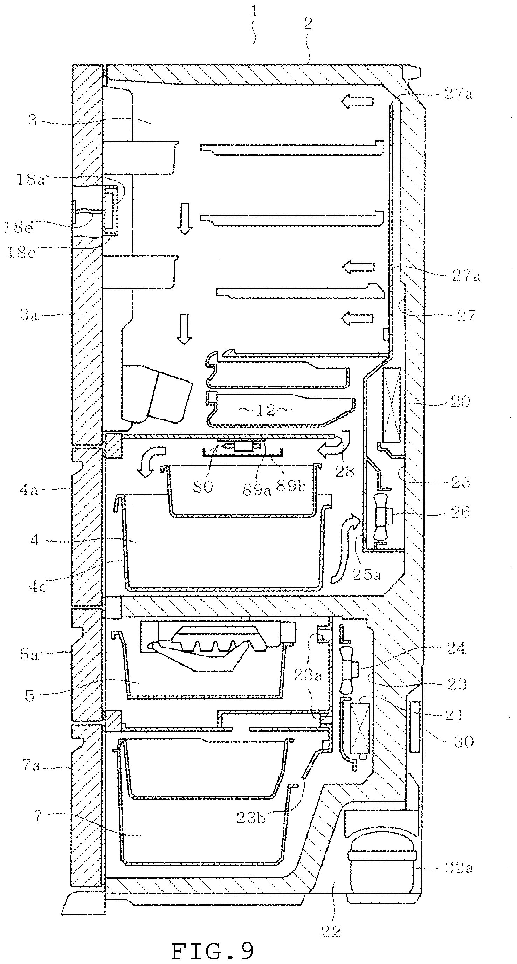

Next, a description will be given on a second embodiment with reference to FIG. 9. In the second embodiment, the mist generator device 80 is provided at the ceiling portion of the vegetable chamber 4. The mist generator device 80 is provided in the midway of the path of airflow indicated by the white arrow. The mist generator device 80 is provided above a high-voltage generator substrate 89a. The high-voltage generator substrate 89a is provided with a circuit configured to generate high voltage for charging the mist to high voltages. The mist generator device 80 and the high-voltage generator substrate 89a are covered by a cover 89b. The airflow upstream side and the airflow downstream side of the cover 89b are opened. Some of the air flowing through the airflow path indicated by the white arrow pass through the inner side of the cover 89b. The mist generated by the mist generator device 80 is fed into the vegetable chamber 4 by being carried by the airflow passing through the inner side of the cover 89b.

The image capturing camera 18a serving as the image capturing unit is provided in a location inside the refrigeration chamber 3 that is displaced from the airflow path indicated by the white arrow. Further, the image capturing camera 18a serving as the image capturing unit is neither provided on the airflow path indicated by the white arrow inside the vegetable chamber 4 nor on the high-voltage generator substrate 89a inside the vegetable chamber 4. The image capturing camera 18a is provided airflow upstream of the mist generator device 80.

Thus, the image capturing camera 18a serving as the image capturing unit is neither provided on the airflow path in which the mist charged to high voltage is fed nor on the high-voltage generator substrate 89a. Thus, it is possible to dispose the image capturing camera 18 at a location distanced from a location where highly concentrated mist is generated. As a result, it is possible to prevent image capturing failures due to fog and haze originating from development of dew condensate on the surface of the cover, etc. while further preventing the image capturing camera 18a from being charged by mist or the high-voltage generator substrate 89a. Further, because the image capturing camera 18a is provided on the airflow upstream of the mist generator device 80, it is possible to prevent the mist discharged from the mist generator device 80 from being carried onto the image capturing camera 18a by the airflow.

### THIRD EMBODIMENT

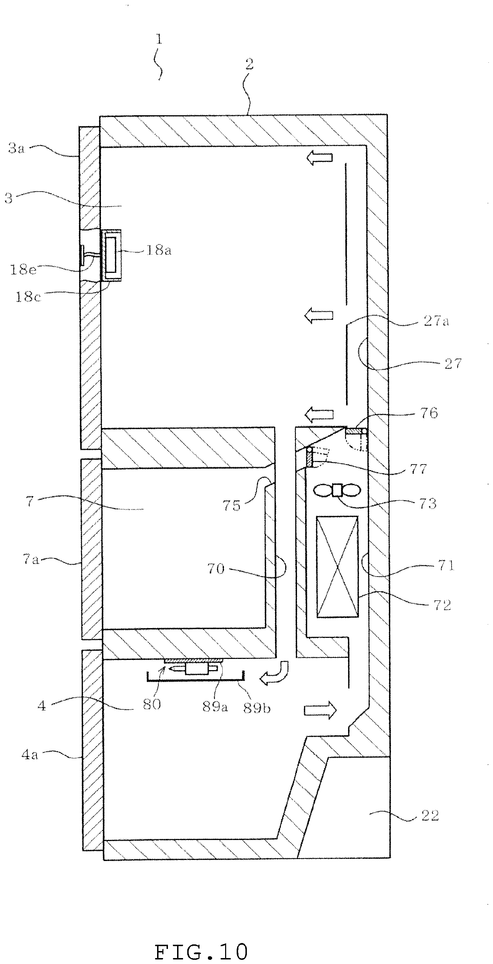

Next, a description will be given on a third embodiment with reference to FIG. 10.

In each of the foregoing embodiments, the refrigerator 1 is configured to cool the storage chambers in the refrigeration temperature zone and the storage chambers in the freezing temperature zone by two coolers, namely the cooler 20 and the cooler 21. In contrast, the refrigerator 1 of the third embodiment is configured to cool the storage chambers in the refrigeration temperature zone and the storage chambers in the freezing temperature zone by a single cooler.

In the refrigerator 1 of the third embodiment, the refrigeration chamber 3, being a storage chamber belonging to the refrigerating temperature zone, is provided in the uppermost portion of the body 2. The vegetable chamber 4, being a storage chamber belonging to the refrigerating temperature zone, is provided in the lowermost portion of the body 2. The freezer chamber 7, being a storage chamber belonging to the freezing temperature zone, is provided between the refrigeration chamber 3 and the vegetable chamber 4. The refrigeration chamber 3 and the vegetable chamber 4 are connected by the connection duct 70. The connection duct 70 is provided in the rearward portion of the refrigeration chamber 3 and the vegetable chamber 4 so as to bypass the freezer chamber 7. The cool air inside the refrigeration chamber 3 is fed into the vegetable chamber 4 through the connection duct 70.

The cooler chamber 71 is provided behind the freezer chamber 7. A cooler 72 and a blower fan 73 are provided in the cooler chamber 71. The cooler chamber 71 is connected to the interior of the refrigeration chamber 3 through the cool-air feed duct 27 and to the freezer chamber 7 through a freezing cool-air duct 75. A refrigerating damper 76 and a freezing damper 77 are provided in the cooler chamber 71.

The refrigerating damper 76 is provided at the connecting portion of the cooler chamber 71 and the cool-air feed duct 27 and is configured to open and close the connecting portion. The freezing damper 77 is provided at the connecting portion of the cooler chamber 71 and the freezing cool-air duct 75. The dampers 76 and 77 are both connected to the main-control portion 30. The main-control portion 30 is configured to control the destination and the amount of the cool air produced by the cooler 72 by opening and closing the dampers 76 and 77. It is thus, possible to cool the refrigeration chamber 3, the freezer chamber 7, and the vegetable chamber 4 to appropriate temperatures.

The refrigerator 1 is further provided with the image capturing camera 18a of the refrigeration chamber side and the mist generator device 80. As was the case in the first embodiment, the image capturing camera 18a of the refrigeration chamber side is provided on a door 3a of the refrigeration chamber 3 and is configured to capture an image of the interior of the refrigeration chamber 3. The mist generator device 80 is provided on the ceiling portion of the vegetable chamber 4.

Accordingly, the cool air produced by the cooler 72 is fed to the refrigeration chamber 3 through the cool-air duct 27 and to the freezer chamber 7 through the refrigerating cool air duct 75 by the blower fan 73 configured to feed air. The cool air fed to the refrigeration chamber 3 is fed to the vegetable chamber 4 through the connection duct 70. The mist discharged by the mist generator device 80 is sucked into the cooler chamber 71 after being circulated through the interior of the vegetable chamber 4. The mist is thereafter fed to the refrigeration chamber 3 through the cool-air feed duct 27.

The main-control portion 30 stops the drive of the blower fan 73 when capturing an image of the interior of the vegetable chamber 4 by the image capturing camera 18a. The feeding of mist into the refrigeration chamber 3 is thus, stopped when image capturing is executed by the image capturing camera 18a. It is thus, possible to prevent the image capturing camera 18a from being charged by the charged mist when image capturing is executed by the image capturing camera 18a.

The mist generator unit is disposed in the storage chamber (vegetable chamber 4) different from the storage chamber (refrigeration chamber 3) in which the camera device is provided. Mist is fed to the storage chamber in which the camera is installed through a duct which bypasses another storage chamber (freezer chamber 7). It is thus, possible to distance the camera from the mist generating unit and prevent the mist from directly contacting the camera even more effectively. The foggy mist is reduced in concentration as it travels over long distance, thereby allowing the entirety of the storage chamber in which the camera device is installed to be captured clearly. The particle diameter of the mist becomes smaller or becomes dissipated as the mist travels over long distance.

Thus, the mist turns into the so-called water vapor by the time it is fed to the storage chamber provided with the camera and hence, is not visible. It is thus, possible to overcome the poor visibility caused by foggy mist and thereby allowing capturing of clear images.

The mist need not be passed through the cooler chamber 71 when being fed to the refrigeration chamber 3. A dedicated duct may be provided which communicates the vegetable chamber 4 with the refrigeration chamber and the mist may fed through the dedicated duct.

Further, a damper may be provided in a duct extending from the vegetable chamber to other storage chambers which is configured to open and close the duct to enable control of mist transfer. Failure in capturing clear image with the camera by poor visibility caused by the foggy mist may also be resolved by reducing the size of particle diameters of the mist.

For example, the mist can be reduced to charged fine particles being on the order of nanometers in size by controlling the voltage level of the electrostatic atomizer device. As a result, the mist becomes invisible and provides good view since a haze of foggy mist no longer exists.

For example, a charged fine particle generator unit may be configured by an electrostatic atomizer device having a discharge electrode made of a metal material and terminating into a sharp needle-like tip. A voltage of approximately -6kV may be applied between the discharge electrode and the counter electrode and the metal material used in the discharge electrode is cooled to obtain a dew condensate of moisture contained in the air. Charged fine particle water having particle diameters sized on the order of nanometers can be obtained by electrostatically atomizing the dew condensate.

The distribution of particle diameter preferably ranges approximately from 3 to 50 nm preferably peaking at approximately 20 nm. Other examples of the charged fine particle generator unit for generating charged fine particles sized on the order of nanometers may include: an ion generator device configured to generate charged fine particle water of H+ (H20) m being a positive ion and O2-(H2O)n being a negative ion (m, n are positive integers) in the ambient for example; a corona discharge device configured to produce clusters of charged fine particle water by emitting bluish white light through air dielectric breakdown and reacting with moisture in the atmosphere. The above described types of devices generate smaller mist compared to an ultrasonic mist generator device. It thus, preferable to use one of the above described devices alone and not in combination with the ultrasonic device as was the case in the first embodiment.

In an example not covered by the claims, invisible mist (that is, mist which is sized (in particle diameter) so as not to be visible in the image captured by the camera device) can be generated by increasing the distribution of charged fine particle water sized in nanometers compared to charged fine particle water sized in micrometers. The charged fine particle water is preferably controlled to be sized in nanometers and more preferably to be less than 400 nm which is the wavelength of blue light. When the mist is reduced to charged fine particle water sized in nanometers, it is possible to dispose the camera device near the charged fine particle water generator device (including for example providing on the same wall (including the door)) since the lens is not easily fogged.

Fogging of the lens and cover, etc. may also be resolved by applying a coating of visible-light-induced photocatalyst on the surface of a transparent coating cover covering the camera device or on the surface of a cover member covering the lens of the camera device or the main portion of a housing in which the camera is installed, etc. The visible-light-induced photocatalyst may be excited by in-fridge lighting, etc. for achieving deodorization and sterilization and thereby prevent accumulation of contaminants on the surfaces of the lens and the cover. A first light emitting unit such as a blue LED which is non-white may be used as the light irradiated on the visible-light-induced photocatalyst.

The visible-light-induced photocatalyst device configured by the visible-light-induced photocatalyst and the first light emitting unit may serve as a hydrophilicizer. The lens of the camera or the cover may become fogged by dew condensate when exposed to the storage chamber and cause the captured image to be blurred. By irradiating the photocatalyst by the first light emitting unit the surface of the lens, cover, etc. are activated by moisture in the air and hydrophilicized by OH radical serving a hydrophilicizer (also serving as a contamination remover). As a result, dew condensate produced on the surfaces of the lens and the cover become susceptible to bond into a thin film of water. This makes it difficult for water droplets, producing undulations, to form and thereby allow diffused reflection of light to be inhibited and render the surfaces of the lens, cover, etc. difficult to fog. It is thus, possible to capture fogless clear images with the camera by producing a hydrophilicizer on or exposing the hydrophilicizer to the lens or the transparent cover located in the direction of image capturing of the camera device. Silver oxide and titanium oxide may be used as a photocatalyst. The blue region of a visible light having a wavelength of approximately 400 nm to 580 nm are used when employing silver oxide (including silver zirconium phosphate). A light emitting diode capable of irradiating light having a wavelength of 380 nm may be used as a light source when employing titanium oxide. The OH radical exhibits advantages of removing or facilitating the removal of contaminants. Thus, the visible-light-induced photocatalyst device also serves as a contamination remover device.

Active species such as OH radical may be employed in the charged fine particle water generator unit so that the active species are arranged to contact the lens and the cover of the camera. Some types of mist may, though not directly, contact the lens, etc. By causing the charged fine particle water containing active species to contact the lens, advantages similar to those of the hydrophilicizer of the visible-light-induced photocatalyst device may be achieved in which case clear images can be expected to be captured.

The mist generator unit may be configured to generate mist having different particle diameters by applying different voltage levels or by being used in combination with other mist generator units. As a result, it is possible to selectively use mist for providing moisture and mist for removing contamination of the lens. When using the mist for removing contamination comprising charged fine particle water sized in nanometers and containing contamination remover (OH radical), the fan, etc. located above the duct as described in the first embodiment may be turned ON to facilitate contact between the mist and the camera. Such manner of control may be referred to as a contamination removing mode.

A charged fine particle water generator unit may be used which generates the charged fine particle water and ozone at the same time or in an alternate fashion. Ozone is highly capable of decomposing contaminants and thus, removes contaminants from the lens, etc. more effectively. Ozone may be generated by causing air dielectric breakdown through corona discharge and thus, may be generated, though in small amounts, by an electrostatic atomizer provided with a counter electrode. Bluish white light may sometimes be emitted from the tip of the discharge electrode when generating ozone.

Blue light (having a wavelength of 400 nm to 500 nm) which is one example of the first light emitting unit may be irradiated on the charged fine particle water containing active species generated by the charged fine particle water generator unit. This is expected to extend the life of the active species. The first light emitting unit is preferably disposed in a location to provide irradiation between the camera device and the mist outlet since such location facilitates the contact between the active species and the lens, etc. The charged fine particle water generator unit also serves as a hydrophilicizer.

The following control may be executed when employing a configuration in which image capturing is performed when a change in the storage amount has been detected by a storage amount detection unit such as a weight sensor provided on a shelf or a storage container for placing food for example. When detecting that the storage amount has been reduced or when the user has operated the go-out switch, the count of rotation of the fan may be reduced to operate in a power save mode. It is further preferable to increase the amount of charged fine particle water generated by the charged fine particle water generator unit to generate greater amount of contamination remover. This is because contaminants such as microbes may grow when operating under the power save mode which may facilitate contamination of the lens, etc. It will be possible to remove the contaminants more effectively by increasing the amount of contamination remover.

Further, when the fan is turned ON after the closing of the door has been detected by the door opening detection unit, it is preferable to: turn ON the first light emitting unit and turn ON the charged fine particle water generator unit to drive the contamination remover device; and turn ON the image capturing by the camera after the contaminant remover has been generated. Storage items are frequently taken in and out of the storage chamber when the door is opened/closed and thus, contamination may occur when the storage items are placed in contact with the lens, etc. of the camera. However, by discharging the contamination remover every time the door is opened/closed, it is possible to facilitate contamination removal and further facilitate manual cleaning of the lens, etc. by the user.

## Claims

1. A refrigerator comprising:
one or more image capturing units (18a, 18b) configured to capture an image of an interior of the refrigerator;
a mist generator unit (80, 90) configured to generate mist to be fed to the interior of the refrigerator;
a plurality of spray ports (29a, 29c) configured to feed the mist generated by the mist generator unit (80, 90) in the interior of the refrigerator; **characterized by** further comprising
a control unit (30) configured to operate the mist generator unit (80, 90) and the one or more image capturing units (18a, 18b)in synchronism, so as to make an adjustment so that the driving of the mist generator device (80) and the image capturing by the one or more image capturing units (18a and 18b) are not performed at the same time.

2. The refrigerator according to claim 1, wherein a hydrophilicizer configured to inhibit fogging is applied to a lens provided at the image capturing unit (18a, 18b) or a cover covering the lens or the image capturing unit (18a, 18b) .

3. The refrigerator according to any one of claims 1 or 2, wherein the mist generator unit (80, 90) is provided with a high-voltage generator unit (86) configured to charge the mist.

4. The refrigerator according to claim 3, wherein the high-voltage generator unit (86) is provided on a substrate (89a) and the image capturing unit (18a, 18b) is not provided on the substrate (89a).

5. The refrigerator according to any one of claims 1 to 4, wherein an airflow path is defined in the interior of the refrigerator for allowing flow of cool air, wherein the one or more image capturing units (18a, 18b) are disposed so as to be displaced from the airflow path.

6. The refrigerator according to any one of claims 1 to 5, wherein the mist is sized in nanometers.

## Patentansprüche

1. Ein Kühlschrank, umfassend:
eine oder mehrere Bildaufnahmeeinheiten (18a, 18b), die konfiguriert sind, um ein Bild des Innenraums des Kühlschranks aufzunehmen;
eine Nebelgeneratoreinheit (80, 90), die konfiguriert ist, um Nebel zu erzeugen, der in das Innere des Kühlschranks geleitet wird;
eine Mehrzahl von Sprühöffnungen (29a, 29c), die konfiguriert sind, um den von der Nebelgeneratoreinheit (80, 90) erzeugten Nebel in das Innere des Kühlschranks zu leiten;
**dadurch gekennzeichnet, dass** sie ferner umfasst
eine Steuereinheit (30), die konfiguriert ist, um die Nebelgeneratoreinheit (80, 90) und die eine oder die mehreren Bilderfassungseinheiten (18a, 18b) synchron zu betreiben, um eine Einstellung vorzunehmen, so dass der Betrieb der Nebelgeneratoreinheit (80) und die Bilderfassung durch die eine oder die mehreren Bilderfassungseinheiten (18a und 18b) nicht zur gleichen Zeit durchgeführt werden.

2. Der Kühlschrank nach Anspruch 1, wobei ein Hydrophilierungsmittel, das konfiguriert ist, um ein Beschlagen zu verhindern, auf einer Linse, die an der Bilderfassungseinheit (18a, 18b) vorgesehen ist, oder auf einer Abdeckung, die die Linse oder die Bilderfassungseinheit (18a, 18b) abdeckt, aufgebracht ist.

3. Der Kühlschrank nach einem der Ansprüche 1 oder 2, wobei die Nebelgeneratoreinheit (80, 90) mit einer Hochspannungsgeneratoreinheit (86) versehen ist, die zum Aufladen des Nebels ausgelegt ist.

4. Der Kühlschrank nach Anspruch 3, wobei die Hochspannungsgeneratoreinheit (86) auf einem Substrat (89a) vorgesehen ist und die Bilderfassungseinheit (18a, 18b) nicht auf dem Substrat (89a) vorgesehen ist.

5. Der Kühlschrank nach einem der Ansprüche 1 bis 4, wobei im Inneren des Kühlschranks ein Luftstrompfad festgelegt ist, um einen Strom von Kühlluft zu ermöglichen, wobei die eine oder mehrere Bilderfassungseinheiten (18a, 18b) so angeordnet sind, dass sie vom Luftstrompfad entfernt sind.

6. Der Kühlschrank nach einem der Ansprüche 1 bis 5, wobei die Größe des Nebels in Nanometern ist.

## Revendications

1. Réfrigérateur comprenant :
une ou plusieurs unités de capture d'image (18a, 18b) configurées pour capturer une image d'un intérieur du réfrigérateur ;
une unité de générateur de brume (80, 90) configurée pour générer de la brume devant alimenter l'intérieur du réfrigérateur ;
une pluralité d'orifices de pulvérisation (29a, 29c) configurés pour alimenter la brume générée par l'unité de générateur de brume (80, 90) à l'intérieur du réfrigérateur ; **caractérisé en ce qu'**il comprend en outre
une unité de commande (30) configurée pour faire fonctionner l'unité de générateur de brume (80, 90) et les une ou plusieurs unités de capture d'image (18a, 18b) en synchronisme, de manière à effectuer un réglage de sorte que l'entraînement du dispositif de générateur de brume (80) et la capture d'image par les une ou plusieurs unités de capture d'image (18a et 18b) ne soient pas effectués en même temps.

2. Réfrigérateur selon la revendication 1, dans lequel un hydrophilisant configuré pour inhiber la formation de buée est appliqué à une lentille fournie à l'unité de capture d'image (18a, 18b) ou à un couvercle couvrant la lentille ou l'unité de capture d'image (18a, 18b).

3. Réfrigérateur selon l'une quelconque des revendications 1 ou 2, dans lequel l'unité de générateur de brume (80, 90) est pourvue d'une unité de générateur haute tension (86) configurée pour charger la brume.

4. Réfrigérateur selon la revendication 3, dans lequel l'unité de générateur haute tension (86) est prévue sur un substrat (89a) et l'unité de capture d'image (18a, 18b) n'est pas prévue sur le substrat (89a).

5. Réfrigérateur selon l'une quelconque des revendications 1 à 4, dans lequel un chemin d'écoulement d'air est défini à l'intérieur du réfrigérateur pour permettre l'écoulement d'air frais, dans lequel les une ou plusieurs unités de capture d'image (18a, 18b) sont disposées de manière à être déplacées du chemin d'écoulement d'air.

6. Réfrigérateur selon l'une quelconque des revendications 1 à 5, dans lequel la brume est dimensionnée en nanomètres.
